# EUROPEAN PATENT APPLICATION

(11) **EP 2 757 797 A1**
(43) Date of publication of application: **23.07.2014**
(21) Application number: 13195143.6
(22) Date of filing: 29.11.2013
(51) Int. Cl.: H04N 21/4415, H04N 21/442, H04N 21/466

(54) **Electronic apparatus and method of controlling the same**

(30) Priority: 16.01.2013 KR 20130004927
(71) Applicant: Samsung Electronics Co., Ltd, Gyeonggi-do 443-742 (KR)
(72) Inventor: Park, Chan-sub, Incheon (KR)
(74) Representative: Walaski, Jan Filip

(57) **Abstract**

An electronic apparatus and a method of controlling the same, receives a user's current use state information including at least one of current user information and surrounding environment information, determines a user's current state by comparing the received current use state information with intention pattern information in which a user's intention is patterned and previously stored in association with a plurality of functions or information providable by the electronic apparatus, and automatically proposes a function corresponding to the determined user's state among the plurality of functions or information providable by the electronic apparatus. Thus, a user's intention or needs is determined to actively propose a proper function so that a user can conveniently use the function.

## Description

The present invention relates to an electronic apparatus and a method of controlling the same, and more particularly to an electronic apparatus and a method of controlling the same, in which a user's intention or needs may be determined to actively propose a proper function so that a user can conveniently use the function.

With the development of technology, an electronic apparatus has provided more and more functions and information.

However, if a user does not know the functions and information of the electronic apparatus or has no intention to control it even though s/he knows the function and information, the function or information provided by the electronic apparatus is not performed. Currently, many functions supported by the electronic apparatus have died out since a user does not know when the functions or information can be used, is annoyed at controlling the functions, and has difficulties in studying all the functions.

That is, even though a user has an intention or desire to use the functions and information providable by the electronic apparatus, the functions and information cannot be utilized if s/he does not issue a specific command corresponding to the functions and information.

Accordingly, if the electronic apparatus determines a user's intention/needs before the intention/needs is changed into a command, the electronic apparatus may actively propose providing the corresponding functions or information to a user. Thus, the electronic apparatus allows a user to issue a simple command so as to carry out the functions or output the information, and the electronic apparatus can show all its own abilities and be more convenient for a user.

Additional aspects and/or advantages will be set forth in part in the description which follows and, in part, will be apparent from the description, or may be learned by practice of the invention.

One or more exemplary embodiments may provide an electronic apparatus and a method of controlling the same, in which a user's intention or needs are determined to actively propose a proper function so that a user can conveniently use the function. According to an aspect of an exemplary embodiment, there is provided a method of controlling an electronic apparatus, the method including receiving a user's current use state information including at least one of current user information and surrounding environment information, determining a user's current state by comparing the received current use state information with intention pattern information in which a user's intention is patterned and previously stored (pre-stored) in association with a plurality of functions or information providable by the electronic apparatus, and automatically proposing at least one function corresponding to the determined user's state among the plurality of functions or information providable by the electronic apparatus.

The method may further include receiving information about an operation being performed by the electronic apparatus, wherein the determining the user's current state includes comparing the intention pattern information with the received current use state information and the received information about the operation being performed by the electronic apparatus.

The electronic apparatus may include a television, and the determining a user's current state may include comparing the intention pattern information with the received current use state information and the broadcasting contents being provided by the television.

The broadcasting contents may include a predetermined broadcasting program including a plurality of segments, and if the determined user's current state prefers one of the plurality of segments, the electronic apparatus may propose a function or information related to only the preference segment.

The electronic apparatus may access Internet, and the method may further include retrieving the information corresponding to the user's current state from the Internet.

The receiving the current use state information may include performing at least one among surrounding environment recognition, user voice recognition and user behavior recognition.

The surrounding environment recognition may include recognizing noise, brightness, temperature, humidity, and an operation of the electronic apparatus.

The at least one function proposed corresponding to the determined user's current state among the plurality of functions or information providable by the electronic apparatus may be performed or output automatically.

The at least one function proposed corresponding to the determined user's current state among the plurality of functions or information providable by the electronic apparatus may be performed or output by or based upon a user's acceptance input.

The plurality of functions or information providable by the electronic apparatus may have priority over one another and a proposed function's priority may be determined corresponding to (or according to) the determined user's current state and frequency of the user's previous acceptance input.

According to another aspect of an exemplary embodiment, there is provided an electronic apparatus which may include an input unit which receives a current use state information including at least one of a user's current user information and surrounding environment information, an output unit which outputs a plurality of functions or information providable by the electronic apparatus, and a controller which determines a user's current state by comparing the received current use state information with intention pattern information in which a user's intention is patterned and previously stored (pre-stored) in association with a plurality of functions or information providable by the electronic apparatus, and controls the output unit to automatically propose at least one function corresponding to the determined user's state among the plurality of functions or information providable by the electronic apparatus.

The input unit may further receive information about an operation being performed by the electronic apparatus, and the controller may determine the user's current state by comparing the intention pattern information with the received current use state information and the received information about the operation being performed by the electronic apparatus.

The electronic apparatus may include a television, and the controller may determine a user's current state by comparing the intention pattern information with the received current use state information and the broadcasting contents being provided by the television.

The broadcasting contents may include a predetermined broadcasting program including a plurality of segments, and if the determined user's current state prefers one of the plurality of segments, the controller may control the output unit to propose a function or information related to only the preference segment.

The input unit may further include a communication unit to communicate with an exterior. That is, the communication unit may communicate with other devices which are disposed externally relative to the electronic apparatus. Thus, the electronic apparatus may access the Internet through the communication unit, and the controller may retrieve the information corresponding to the user's current state from the Internet.

The controller may perform at least one among surrounding environment recognition, user voice recognition and user behavior recognition with regard to the received current use state information.

The input unit may include at least one sensor for recognizing noise, brightness, temperature, humidity, and an operation of the electronic apparatus in order to perform the surrounding environment recognition.

The at least one proposed function corresponding to the determined user's current state among the plurality of functions or information providable by the electronic apparatus may be performed or output automatically.

The at least one proposed function corresponding to the determined user's current state among the plurality of functions or information providable by the electronic apparatus may be performed or output by a user's acceptance input.

The plurality of functions or information providable by the electronic apparatus may have priority over one another and a proposed function's priority may be determined corresponding to (or according to) the determined user's current state and frequency of the user's previous acceptance input.

The electronic apparatus may include an output unit to output the at least one proposed function to the user, the output unit including at least one of a display or voice output unit. The electronic apparatus may receive the intention pattern information from a database, wherein the database may store a setting value corresponding to an optimal setting for the at least one proposed function, the optimal setting being determined based on the determined user's state.

According to another aspect of an exemplary embodiment, there is provided a method of controlling an electronic apparatus, the method including: receiving real-time state information of a user based on user information or environment information obtained by the electronic apparatus; comparing the received real-time state information of the user with pre-stored intention pattern information associated with a plurality of functions or information available in the electronic apparatus; determining an interest of the user in a first function available in the electronic apparatus when a match is determined based upon the comparison; and proposing the first function to the user.

A match may be determined based upon the comparison when a matching degree between the received real-time state information of the user and the pre-stored intention pattern information is equal to or greater than a predetermined threshold value.

The method may further include receiving information about content being provided by the electronic apparatus, wherein the comparison may include comparing the pre-stored intention pattern information with the received real-time state information of the user and the content being provided by the electronic apparatus.

The above and/or other aspects will become apparent and more readily appreciated from the following description of exemplary embodiments, taken in conjunction with the accompanying drawings, in which:
FIG. 1 is a block diagram of an electronic apparatus according to an exemplary embodiment;
FIG. 2 is a block diagram of an electronic apparatus according to another exemplary embodiment;
FIG. 3 is a block diagram of an electronic apparatus according to still another exemplary embodiment;
FIG. 4 is a block diagram of when an electronic apparatus according to an exemplary embodiment is a television;
FIG. 5 is a flowchart showing a method of controlling an electronic apparatus according to an exemplary embodiment;
FIG. 6 is a concept view showing a method of controlling a television regarded as an electronic apparatus according to an exemplary embodiment; and
FIG. 7 is a flowchart showing the concept view of FIG. 6 in detail.

Reference will now be made in detail to the embodiments, examples of which are illustrated in the accompanying drawings, wherein like reference numerals refer to the like elements throughout. The embodiments are described below to explain the present invention by referring to the figures and are not intended to be limiting.

An electronic apparatus according to an exemplary embodiment may include a television, an air conditioner, an audio system, a refrigerator and the like home appliances, the functions of which are used, executed, or carried out by commands directly input by a user. However, these are merely examples, and the disclosure is not limited thereto. The electronic apparatus may broadly include any electronic device which may perform a function which may be carried out based on a command input from a user.

For example, with the development of technology, the television has supported various functions such as enabling a user to access or browse the Internet, obtain video on demand (VOD), play a game, etc. as well as changing a channel setting, and adjusting a picture and/or sound quality setting.

While watching the television, a user has most of time to see a broadcasting program corresponding to a channel after setting the channel once. In other words, a user typically provides an input to change a channel to watch a broadcasting program and spends most of the time merely watching the television program without accessing any of the other functions that may be available in the television. That is, a user passively watches the broadcasting program on the television, and does not use all the functions of the television.

For example, the sound setting may include functions supporting various modes such as a "news mode" for news, a "music mode" for music, a "movie mode" for movies, etc. For example, the video or picture setting may include functions supporting various modes such as a "sports mode" for watching sports, a "cinema mode" for watching movies, a "game mode" for watching or playing games, etc. However, a user rarely changes the modes in accordance with the broadcasting programs. In general, a user chooses and sets an easy function and does not change the function setting rather than change and set a proper function for every broadcasting program.

According to an exemplary embodiment, there are provided an electronic apparatus such as a television, the functions of which are passively used by a user, and a method of controlling the same, in which a user's intention or needs are determined to actively propose one or more proper functions so that a user can conveniently use the function(s).

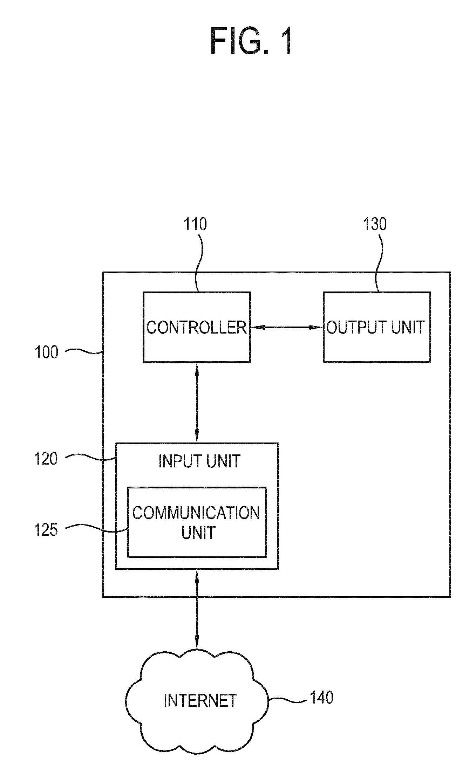

FIGS. 1 to 3 are block diagrams of electronic apparatuses according to exemplary embodiments.

Here, current (real-time) use state information and a user's state are explained in further detail.

A user's current use state information may include user information and surrounding environment information. The user information may include voice, behavior, figure, expression, sex and age of a user who is using the electronic apparatus 100, the number of users who are using the electronic apparatus 100, a user's direct input, etc. In some circumstances, a user's voice may not be spoken or used to control the electronic apparatus. Also, the surrounding environment information may include surrounding brightness, noise degree, surrounding temperature, humidity, time information, location information, etc. At least one of the voice, behavior, figure, expression, emotion, sex and age of a user who is using the electronic apparatus 100, the number of users who are using the electronic apparatus 100, a user's direct input, the surrounding brightness, the noise degree, the surrounding temperature, humidity, time information, location information, and the like, may be considered in connection with a user's intention such as preference, interest and needs and/or his/her condition, and therefore they may be employed as references for determining a user's current state.

A user's state refers to a user's intention or body state, who is using or viewing the electronic apparatus 100. For example, the user's state may include a user's preference, interest, needs, body condition, etc. Conventionally, in order to reflect a user's intention or body state to the electronic apparatus 100 being in use, a complicated command has to be input to control a corresponding function to be carried out. However, according to an exemplary embodiment, the electronic apparatus 100 actively searches and proposes a function corresponding to a user's intention or body state among a plurality of functions providable by the electronic apparatus 100, which are conventionally not carried out since a user does not know when the functions or information can be used, is annoyed at how to control or use such functions, and has difficulties in studying all the functions. In accordance with the embodiments disclosed herein, a user issues a simple command with regard to such a proposed function, thereby reflecting a user's intention or body condition to the electronic apparatus 100.

Meanwhile, an input unit 120 may further receive information about operations that are being performed in the electronic apparatus 100. The operations being performed in the electronic apparatus 100 refers to a function or information that is provided to a user by the electronic apparatus 100. For example, if the electronic apparatus is the television, the operation may include an operation of providing broadcasting contents. For example, broadcasting contents may include video information and audio information. Such video and audio information included in the broadcasting contents may be compared with information (behavior, figure, expression, surrounding environment, etc.) about a user's image and voice, included in a user's current use state information.

The input unit 120 may be used to receive a user's current use state information. For example, the input unit 120 may include a microphone (not shown) for recognizing voice, surrounding noise, etc.; a camera (not shown) for recognizing a user's behavior, figure, expression, the number of joint users, etc.; a brightness sensor (not shown) for recognizing brightness; a touch sensor (not shown) for recognizing touch input; a temperature sensor (not shown) for sensing temperature; a humidity sensor (not shown) for sensing humidity; a remote controller (not shown) for receiving a user's direct command input; a clock (not shown) for obtaining time information; a GPS or other navigation device (not shown) to obtain location information; and so on.

Referring to FIGS. 1 to 3, the input unit 120 may be provided in the electronic apparatus 100, but is not limited thereto. Alternatively, the input unit may be provided externally and connected to the electronic apparatus 100. For example, the input unit may be connected to the electronic apparatus 100 over a wired or wireless network. For example, the input unit 120 may be connected to the electronic apparatus 100 using a serial, HDMI, USB, or other like connection, or may receive an input from the input unit 120 wirelessly through a network (e.g., BLUETOOTH or WI-FI) or via a remote control device such as by using an infrared remote control, for example. The input unit 120 may also be embodied by a mobile device, such as a cellular phone, smart phone, tablet, portable computer, etc. Further, the microphone, the camera, the brightness sensor, the touch sensor, the temperature sensor, the humidity sensor, etc. may be built-in the input unit 120, or separately provided in a remote controller for direct input. Such configurations of the input unit 120 may be variously combined, and there is no limit to the combination. For example, if the microphone is provided in the remote controller, the electronic apparatus 100 may receive voice information obtained by the remote controller through wireless communication of a communication unit 125 to be described later.

According to an exemplary embodiment, the input unit 120 provided in the electronic apparatus 100 may further include the communication unit 125 for communicating with the exterior (e.g., communicating with other devices or a user external to the electronic apparatus).

In this case, as shown in FIG. 1, the controller 110 may access the Internet 140 (or other computer network) through the communication unit 125 and perform searching based on a user's current use state information. If the electronic apparatus is the television, the input unit 120 may receive information from the Web, a movie database, a program homepage, a social network service (SNS), etc. through the Internet (or other computer network) based on information from an electronic program guide, for example.

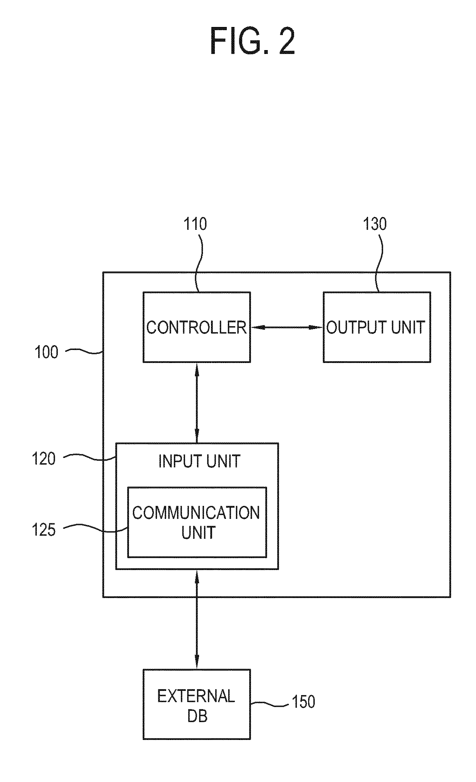

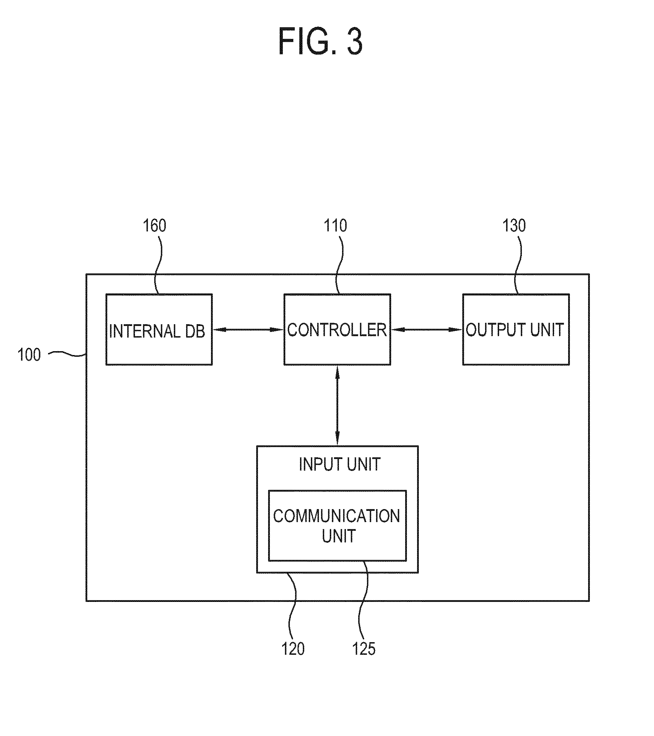

Also, as shown in FIGS. 2 and 3, through the communication unit 125 the controller 110 may receive intention pattern information in which a user's intention related to the plurality of functions or information providable by the electronic apparatus is patterned and previously stored from an internal database (DB) 160 provided in the electronic apparatus 100 or an external DB 150. Also, the database 150, 160 provided inside/outside the electronic apparatus 100 may store a basic setting value for the electronic apparatus 100, a professional setting value, a setting value for a specific user such as the aged and children, etc. The electronic apparatus 100 may load optimal setting values corresponding to a user's current use state information with reference to various setting values stored in the database 150, 160. For example, the database may store a setting value for a set of "the aged-sound setting-volume-surrounding brightness-video setting", etc. The database may include a collection of data and supporting data structures which may be stored, for example, in a storage device including non-transitory computer-readable media including magnetic media such as hard disks, floppy disks, and magnetic tape; optical media such as CD ROM disks and DVDs; magneto-optical media such as optical discs; and hardware devices such as read-only memory (ROM), random access memory (RAM), flash memory, USB memory, and the like.

The controller 110 may determine a user's current state by comparing the current use state information and the intention pattern information previously stored by patterning a user's intention related to a plurality of functions or information providable by the electronic apparatus 110, and controls an output unit to propose one or more functions corresponding to the determined user's state among the plurality of functions or information providable by the electronic apparatus.

If a user's current state is determined based on the current use state information, one or more functions corresponding to the determined user's state among the plurality of functions or information providable by the electronic apparatus 100 is proposed to a user, thereby asking him/her whether to perform the corresponding function(s). The output unit 130 may include an image output unit (not shown) such as a display screen or a voice output unit (not shown) such as a loudspeaker.

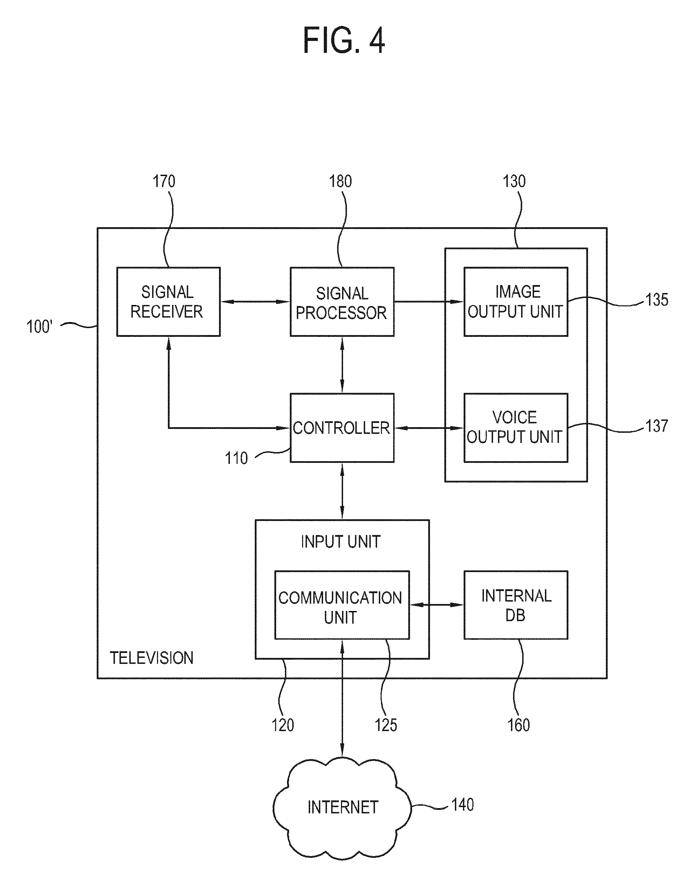

FIG. 4 is a block diagram of when an electronic apparatus according to an exemplary embodiment is a television. As shown in FIG. 4, a television 100' includes a signal receiver 170 which receives a broadcasting signal, a signal processor 180 which processes a received broadcasting signal, an output unit 130 which includes an image output unit 135 for displaying an image and a voice output unit 137 for outputting voice, an input unit 120 which receives a user's current use state information and includes the communication unit 125, and a controller 110 which proposes one or more functions corresponding to a user's state determined in accordance with the above-described embodiments, among the plurality of functions providable by the television 100'.

If the electronic apparatus 100 is the television 100', the controller 110 may receive at least one of the voice, behavior, figure, expression, sex and age of a user who is watching the television, the number of users who are using the electronic apparatus 100, a user's direct input, the surrounding brightness, the noise degree, the surrounding temperature, the humidity, and the like, through the input unit 120. For example, if a user's voice or behavior corresponding to the previously stored intention pattern information is input through the input unit 120, the controller 110 determines whether broadcasting contents currently provided by the television 100' contains voice and behavior matching with a user's voice or behavior. As a result, if a matching degree of voice and behavior between a user and the broadcasting contents is equal to or greater than a predetermined value, the controller 110 determines a user's current state such as a user's intention such as preference, interest, needs or body condition. For example, if it is determined that a user's current state prefers the broadcasting contents being currently provided through the television 100', the controller 110 may propose a relevant scheduled recording function among the plurality of functions supported by the electronic apparatus 100. In the case of the scheduled recording function, the controller 110 may propose a predetermined segment of the broadcasting contents to be recorded corresponding to a user's state.

Meanwhile, the electronic apparatus 100 according to an exemplary embodiment further includes the output unit 130. If a user's current state is determined based on the current use state information, one corresponding to the determined user's state among the plurality functions providable by the electronic apparatus 100 is proposed to a user through the output unit 130, thereby asking him/her whether to perform the corresponding function. The output unit 130 may include an image output unit (e.g., image output unit 135) such as a display screen or a voice output unit (e.g., voice output unit 137) such as a loudspeaker. The display may include, for example, a LCD, OLED, LED, plasma display, cathode ray tube display and the like.

Then, a user may issue a simple command such as 'Yes' or 'No' through the input unit 120 with regard to the function proposed by the electronic apparatus 100 through the output unit 130. The user may issue the command via the input unit 120, for example. Thus, the functions of the electronic apparatus 100 corresponding to a user's intention or body state can be utilized easily without having to enter complicated commands to have a function performed. Instead, a simple command may be entered in response to the electronic apparatus' inquiry asking the user whether the user desires one or more functions to be performed and/or output.

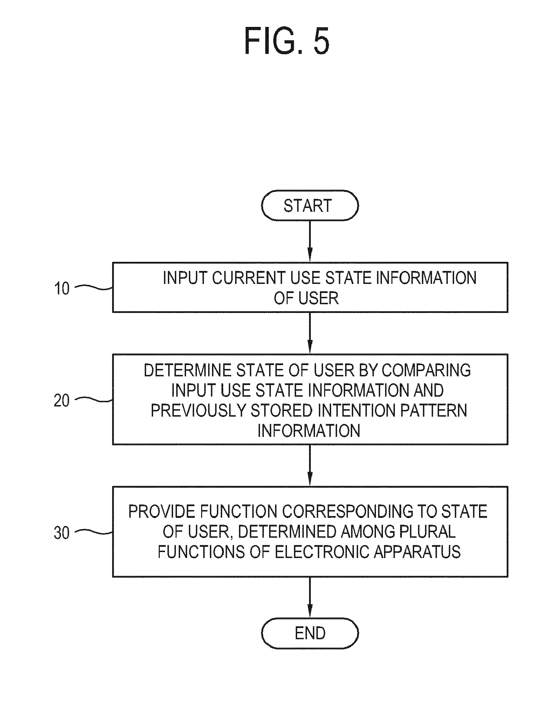

FIG. 5 is a flowchart showing a method of controlling an electronic apparatus according to an exemplary embodiment.

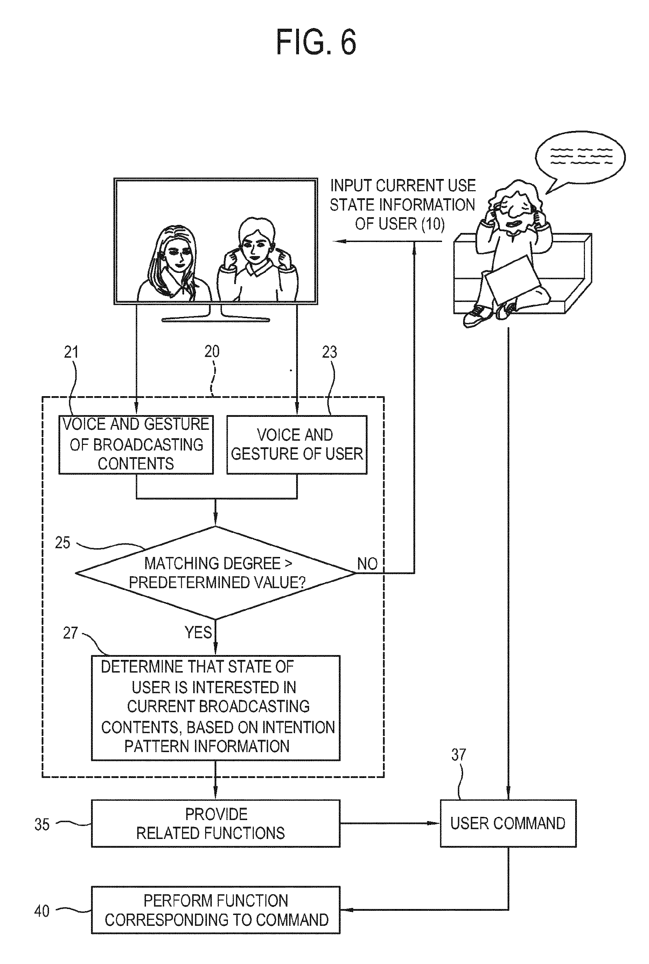

As shown in FIG. 5, a method of controlling the electronic apparatus according to an exemplary embodiment includes: receiving current use state information including at least one of a user's current user information and surrounding environment information (10); determining a user's current state by comparing the input current use state information with the intention pattern information obtained by patterning and previously storing a user's intention related to the plurality of functions or information supported by the electronic apparatus 100 (20); and carrying out at least one function corresponding to the determined user's state among the plurality of functions supported by the electronic apparatus 100 (30). Here, the operation 10 of receiving a user's current use state information may include receiving information about an operation being performed by the electronic apparatus 100. If the electronic apparatus 100 is the television, both the received user's current use state information and the broadcasting contents being provided by the television are compared with the intention pattern information, thereby determining a user's current state. Also, if the broadcasting contents include a predetermined broadcasting program including a plurality of segments, and the determined user's current state shows that one or more segments among the plurality of segments is preferred, the television may propose a function or information related to only the preferred segment. The television used as an example of the electronic apparatus 100 will be described in detail with reference to FIG. 6.

Here, a comparison between the previously stored intention pattern information and the received current use state information may be achieved with reference to a predetermined matching degree. In this case, if the matching degree is equal to or greater than a predetermined value, it is determined that the previously stored intention pattern information is matched with the received current use state information, and a user's current state is determined based on the intention pattern information.

FIG. 6 is a concept view showing a method of controlling a television regarded as an electronic apparatus according to an exemplary embodiment.

First, the television previously stores in a database for example, intention pattern information obtained by patterning a user's intention related to the plurality of support functions or information. The database of the intention pattern information may be provided inside or outside of the television. While the television provides predetermined broadcasting contents, a user's current use state information is input through the input unit 120 (10). Here, a user's current use state information is input for determining a user's intention (state). In one aspect, the user's intention is not spoken in the form of a command or operated. That is, the user's intention and/or state information is gleaned or obtained by the electronic apparatus or television without the user actively inputting a command or operating the electronic device to achieve a function which the electronic apparatus or television performs.

Thus, if a user's current use state information is input through the input unit 120, the controller 110 determines a user's current state by comparing it with the intention pattern information (20). Such a determination based on the intention pattern information may determine whether a user's current use state information corresponds to a predetermined command before it is issued as a command. For example, before comparison with the intention pattern information, if a user's voice and behavior are matched with voice and behavior of the broadcasting contents by a predetermined value or more, the controller 110 may determine that a user is interested in the current broadcasting contents (20). At this time, the controller 110 may perform voice recognition for the voice input through the microphone and the behavior recognition for behavior taken by the camera (23). However, such recognized voice and behavior are not commands yet. Also, the input unit 120 of the television receives information about the operation being currently performed by the television (21). The input unit 120 may receive information about a television's setting state such as a video mode, a sound mode, a volume, a function, etc., a connection state of peripheral devices, powering on/off of peripheral devices, and so on (21). Here, the input unit 120 may receive not only an electronic program guide about the broadcasting contents but also information about recognized behavior and voice contained in the currently broadcasted broadcasting contents (21). Then, the controller 110 may determine the matching degree about whether a user's voice recognition information and behavior recognition information are matched with the voice recognition information and the behavior recognition information being currently provided by the television. If the matching degree is equal to or greater than a predetermined value, a user's current state is determined as s/he is interested in the broadcasting contents, based on the intention pattern information (27). Thus, when it is determined that a user is interested in the current broadcasting contents, the user's current state is regarded as a command. Here, the determination that the user is interested and the determination that the user's current state is regarded as a command, may be performed without the user actively providing a corresponding command to the electronic apparatus.

If a user's current state is determined and input as a command, the controller 110 proposes one or more functions corresponding to the determined user's state among the plurality of functions providable by the television (35). Here, the proposed function(s) may be offered to the user without actively requesting that a function be performed, and instead the electronic apparatus or television obtains the user's desires or intent through inferential information.

Meanwhile, in one embodiment, one or more functions corresponding to the determined user's state among the plurality of functions providable by the television may be proposed as long as it does not interrupt an operation being currently performed by the electronic apparatus 100.

According to an exemplary embodiment, in the case of the television, one function corresponding to the determined user's state among the plurality of functions providable by the television may be proposed without disturbing a user who watches the television. For example, the function may be proposed in the form of a subtitle on an arbitrary side of the screen. Alternatively, or in addition to, the function may be proposed in the form of a question to the user. The voice output question may be offered during a convenient time, such as during a commercial, during a period of silence while content is being played, for example.

For example, if a user's voice such as "I have sore eyes", "It dazzles me", "It is dark", "I couldn't see" is input through the microphone of the input unit 120 (10), the controller 110 performs voice recognition (23), determines a matching degree with regard to the operation 21 being performed by the television (25), and determines that a user's state needs something related to the video function of the television, based on the intention pattern information (27).

Then, the controller 110 proposes a video function of the television corresponding to results from recognizing a user's voice (35). At this time, information received in association with the video function may be loaded among the information received in association with the whole functions of the television. For example, the information received in association with the video function may include information about surrounding brightness collected though an optical sensor of the input unit 120, information about brightness of an image processed by a video processor and currently displayed, information about contents collected based on the electronic program guide, etc. The controller 110 reflects information of a user's voice to the information collected in association with the video function of the television, and searches an optimal setting value for the selected video function. At this time, the setting value may be loaded from the database 150, 160 provided inside/outside the electronic apparatus. Thus, the television can provide video-related functions of the optimal setting value in consideration of the user's state (35). For example, the television may propose a video function to change the setting value and the user may simply respond with a yes or no answer without having to enter several commands to change the picture.

According to another exemplary embodiment, if information about noise surrounding a user is collected through the microphone of the input unit 120 (10), the controller 110 performs noise recognition (23), determines a matching degree with regard to the operation 21 being currently performed by the television (25), and determines that a user's state needs something related to the audio function of the television, based on the intention pattern information (27). The controller 110 reflects information about the surrounding noise to the information collected in association with the audio function such as a movie mode function, a news mode function, a music mode function, a volume control function, etc., and thus searches an optimal volume setting value. At this time, the setting value may be loaded from the database 150, 160 provided inside/outside the electronic apparatus. Thus, the television can provide audio-related functions of the optimal setting value in consideration of the user's state (35). For example, the television may propose an audio function to change the setting value and the user may simply respond with a yes or no answer without having to enter several commands to change the audio mode and/or volume setting.

According to still another exemplary embodiment, if a user's voice such as "I can't hear news" is input through the microphone of the input unit 120 (10), the controller 110 performs voice recognition (23), determines a matching degree with regard to the operation 21 being currently performed by the television (25), and determines that a user's state needs something related to the audio function of the television, based on the intention pattern information (27). In this case, the controller 110 reflects information about the surrounding noise to the information collected in association with the audio function such as a movie mode function, a news mode function, a music mode function, a volume control function, etc., and thus proposes the new mode function (35). For example, the television may propose an audio function to change the setting value and the user may simply respond with a yes or no answer without having to enter several commands to change the audio mode and/or volume setting.

According to still another exemplary embodiment, if a user's voice and behavior are input through the microphone and the camera of the input unit 120 provided in the television while s/he is watching a certain segment of a predetermined comedy program through the television (10), the controller 110 recognizes a user's voice and behavior (23). Also, the controller 110 recognizes voice and behavior information from the operation (21) being currently performed by the television, that is, recognizes information about certain music, a gesture and a buzzword in the segment of the broadcasting contents (e.g., a comedy program) being currently provided, thereby comparing the voice and behavior information with the recognized user's voice and behavior. Based on the results from the comparison, if the matching degree is equal to or greater than a predetermined value (25), the controller 110 determines a user's state as s/he prefers or is interested in the segment of the broadcasting contents (27). Thus, the controller 110 may propose a scheduled recording function with regard to only the corresponding segment in the broadcasting time of the comedy program (35). For example, the television may propose a record function to record particular segments or all of the comedy program and the user may simply respond with a yes or no answer without having to enter several commands to record a portion or all of the comedy program.

According to still another exemplary embodiment, the controller 110 may previously determine what information a user currently needs based on the intention pattern information and provide a function corresponding to the determined information. For example, suppose that the input unit 120 receives voice information of "the floods are out" through the news of the television and the controller 110 recognizes such voice information while a user is watching news through the television (21). In this case, if users who are watching the television talk with each other as follows: "Don't tell me the floods arrives here", "Well, it's raining...", the microphone of the input unit 120 receives the conversation of users (10) and the controller 110 performs the voice recognition with regard to the conversation (23). Thus, if the result (23) from recognizing a user's voice of "flood" is matched with the result (21) of recognizing the voice of "flood" input from news of the television, and the matching degree is equal to or greater than a predetermined value (25), the controller 110 may retrieve information about the flood/rainfall, etc. of the corresponding location using the Internet 140, for example, and the television may propose a function of providing such information (35). For example, the television may propose to display information obtained from a web site regarding the floods, or may provide a URL or link to a web site to the user and the user may simply respond with a yes or no answer to display such information or to connect to the web site, without having to enter several commands to access such information over the Internet.

Such proposals of the electronic apparatus 100 may be achieved by various response scenarios through the output unit 130. Such various response scenarios may also be stored in the database 150, 160 which may be provided inside or outside the electronic apparatus 100, and provided in accordance with a user's tendency. Thus, the electronic apparatus 100 may use the results of previous scenarios to learn or determine a user's interests or intentions in future scenarios. The results of previous scenarios may contain information such as the contents of the broadcast at the time of the scenario, user information such as the identity of the user and state information of the user, the functions provided to the user, and whether the proposed functions were accepted (performed) or declined (not performed).

As described above, when the electronic apparatus 100 proposes a support function (35), a user may issue a simple command such as 'Yes' or 'No' through the input unit 120 (37) so that the proposed function can be performed or refused.

According to an exemplary embodiment, if a user says "I have sore eyes" while watching movie on the television (10), the controller 110 may propose a phrase of "Do you want screen adjustment?" among responses prepared for the functions determined based on the above voice information, through the output unit 130 (35).

The electronic apparatus 100 waits for a user's simple command, i.e., "Yes/No". If a user says 'Yes', the controller 110 performs the proposed function with an optimal setting value (40). Here, the phrases used by the electronic apparatus 100 may be pre-stored in a lookup table and may be selected based on the results of the determination of the state of the user and the proposed function.

According to another exemplary embodiment, if a user says "I can't hear well" while watching news (10), the electronic apparatus 100 may propose a phrase of "Do you want to hear better?" among responses prepared for the functions determined based on the above voice information, through the output unit 130 (35).

The electronic apparatus 100 waits for a user's simple command, i.e., "Yes/No". If a user says 'Yes', the controller 110 performs the proposed function with an optimal setting value (40).

According to still another exemplary embodiment, if voice information containing the word "flood" is recognized from conversation between users and voice information containing the word "flood" is also recognized from the broadcasting contents (20), the electronic apparatus 100 may propose a phrase of "Do you want to know present weather?" or alternatively, "Do you want to go to www.weather.com?" among responses prepared by the controller 110 for the functions determined based on the above voice information, through the output unit 130 (35).

Then, the electronic apparatus 100 waits for a user's simple command, i.e., "Yes/No". If a user says 'Yes', the controller 110 performs the proposed function with an optimal setting value (40). In this case, information about the present weather may be provided from the Internet 140.

According to still another exemplary embodiment, if it is recognized that a user prefers a certain segment of a broadcasting program (23), the electronic apparatus 100 may propose a phrase of "Do you want to collect and record this segment?" (35) and perform scheduled recording to collect the segments in a storage device (not shown) when a user says "Yes" (40). Alternatively, the electronic apparatus 100 may propose a phrase of "Do you want to see this segment from the recording collection?" (35).

Thus, the electronic apparatus 100 compares a user's current use state information with the operation 21 performed by the electronic apparatus 100 to determine the matching degree (25), and actively determines an optimal setting value about the corresponding function based on the intention pattern information, thereby proposing it through the output unit 130 (35). Then, a user issues a simple command, i.e., "Yes/No" to thereby determine whether to perform the function of the electronic apparatus 100.

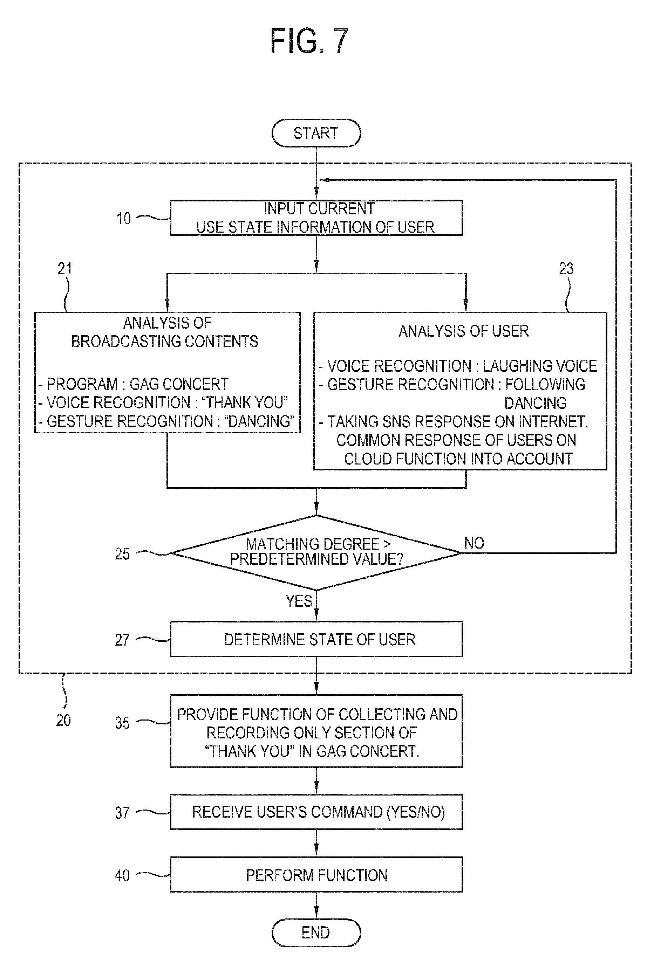

FIG. 7 is a flowchart related to the concept view of FIG. 6, in which an example of functions providable by the television is illustrated with regard to a certain segment of the broadcasting contents.

Suppose that a user is watching a certain segment of a predetermined comedy program through the television and the camera and the microphone of the input unit 120 provided in the television respectively receive a user's behavior and voice.

The controller 110 analyzes the operation being currently performed by the television (21). That is, the controller 110 recognizes voice and behavior information from information about certain music, a gesture and a buzzword in the corresponding segment of the broadcasting contents (e.g., a comedy program) being currently provided. For example, suppose that the broadcasting program provided by the television is a "GAG concert", and voice of "Thank you" and behavior of dance are recognized. Also, the controller 110 analyzes a user's voice and behavior (23). Suppose that a user's voice is recognized as the sound of laughter and a user's behavior is recognized as imitation of the dance. At this time, the analysis of a user (23) may be achieved in consideration of another user from the Internet, i.e., social network service (SNS) responses from the Internet, and a common response of users under from cloud computers as well as a user in front of the television may be taken into account in determining or analyzing the user's intentions or preferences.

If the analysis result 21 of the broadcasting contents and the analysis result 23 of a user are compared and the matching degree is equal to or greater than a predetermined value (25), the controller 110 compares a user's current use state information with the intention pattern information, and determines a user's state as a user prefers or is interested in the broadcasting contents, thereby recognizing the user's state as a command (27).

Based on the determined user's current use state information, that is, a user's current use state information recognized as a command, the electronic apparatus 100 may propose an optimal function corresponding to the determined user's state among a plurality of providable functions. For example, the electronic apparatus 100 may propose a function of recording and collecting only the segments of "Thank you" in the currently provided broadcasting contents of "GAG concert" (35). For example, the electronic apparatus 100 responds with a phrase of "Do you want to collect and record this segment?" (35) and performs scheduled recording to collect the segments in a storage device (not shown) (40) when a user says "Yes" (37). Alternatively, the electronic apparatus 100 may also propose a phrase of "Do you want to see this segment from the recording collection (35).

The storage device (not shown) may be embodied by, for example, non-transitory computer-readable media including magnetic media such as hard disks, floppy disks, and magnetic tape; optical media such as CD ROM disks and DVDs; magneto-optical media such as optical discs; and hardware devices such as read-only memory (ROM), random access memory (RAM), flash memory, USB memory, and the like.

Meanwhile, the electronic apparatus 100 may include an air conditioner (not shown). In this case, the electronic apparatus may propose and perform humidity control or the like in response to a user's operation in which s/he fans herself/himself with her/his hands or a user's voice of "sweat" or "I am really hot".

Further, if the electronic apparatus 100 is an audio system (not shown), it may propose and perform an equalization setting in response to a certain genre or a user's dance. For example, bass settings, treble settings, volume settings, recording settings, may be controlled and proposed to a user.

As described in the example embodiments disclosed above, an electronic apparatus and a control method thereof actively propose functions which may be performed by the electronic apparatus to a user, and performs the function in response to a user's simple command, so that it is more convenient for a user and all the functions thereof can be utilized even though a user does not know all the functions or finds that performing such functions is annoying, difficult, or time consuming.

As described above, an exemplary embodiment of the present invention provides an electronic apparatus and a method of controlling the same, in which a user's intention or needs is determined to actively propose a proper function so that a user can conveniently use the function.

The apparatuses and methods according to the above-described example embodiments may use one or more processors, which may include a microprocessor, central processing unit (CPU), digital signal processor (DSP), or application-specific integrated circuit (ASIC), as well as portions or combinations of these and other processing devices.

The terms "module", and "unit," as used herein, may refer to, but are not limited to, a software or hardware component or device, such as a Field Programmable Gate Array (FPGA) or Application Specific Integrated Circuit (ASIC), which performs certain tasks. A module or unit may be configured to reside on an addressable storage medium and configured to execute on one or more processors. Thus, a module or unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules/units may be combined into fewer components and modules/units or further separated into additional components and modules.

Each block of the flowchart illustrations may represent a unit, module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The apparatuses and methods according to the above-described embodiments may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM disks and DVDs; magneto-optical media such as optical discs; and hardware devices that are specially configured to store and perform program instructions, such as read-only memory (ROM), random access memory (RAM), flash memory, USB memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa. In addition, a non-transitory computer-readable storage medium may be distributed among computer systems connected through a network and computer-readable codes or program instructions may be stored and executed in a decentralized manner. In addition, the computer-readable storage media may also be embodied in at least one application specific integrated circuit (ASIC) or Field Programmable Gate Array (FPGA).

Although a few exemplary embodiments have been shown and described, it will be appreciated by those skilled in the art that changes may be made to these exemplary embodiments without departing from the principles of the invention, the scope of which is defined in the appended claims.

## Claims

1. A method of controlling an electronic apparatus, the method comprising:
receiving a user's current use state information comprising at least one of current user information and surrounding environment information;
determining a user's current state by comparing the received current use state information with pre-stored intention pattern information associated with a plurality of functions or information providable by the electronic apparatus; and
automatically proposing at least one function corresponding to the determined user's state among the plurality of functions or information providable by the electronic apparatus.

2. The method according to claim 1, further comprising receiving information about an operation being performed by the electronic apparatus,
wherein the determining the user's current state comprises comparing the intention pattern information with the received current use state information and the received information about the operation being performed by the electronic apparatus.

3. The method according to claim 1 or 2, wherein the electronic apparatus comprises a television, and
the determining the user's current state comprises comparing the intention pattern information with the received current use state information and broadcasting contents being provided by the television.

4. The method according to claim 3, wherein the broadcasting contents comprises a predetermined broadcasting program comprising a plurality of segments, and
if the determined user's current state prefers a segment among the plurality of segments, the electronic apparatus proposes a function or information related to only the preferred segment.

5. The method according to one of claims 1 to 4, wherein the method further comprises retrieving information corresponding to the user's current state from the Internet using the electronic apparatus.

6. The method according to one of claims 1 to 5, wherein the receiving the current use state information comprises performing at least one among surrounding environment recognition, user voice recognition and user behavior recognition.

7. The method according to claim 6, wherein the surrounding environment recognition comprises recognizing at least one of noise, brightness, temperature, humidity, and an operation of the electronic apparatus.

8. The method according to one of claims 1 to 7, wherein the electronic apparatus automatically performs or outputs the at least one proposed function.

9. The method according to one of claims 1 to 8, wherein the at least one function proposed by the electronic apparatus is performed or output based on a user's acceptance input.

10. The method according to claim 9, wherein the plurality of functions or information providable by the electronic apparatus prioritizes possible functions to be proposed to the user, based on the determined user's current state and frequency of the user's previous acceptance input.

11. An electronic apparatus comprising:
an input unit to receive current use state information comprising at least one of current user information and surrounding environment information; and
a controller to determine a user's current state by comparing the received current use state information with pre-stored intention pattern information associated with a plurality of functions or information providable by the electronic apparatus, and to automatically propose at least one function corresponding to the determined user's state among the plurality of functions or information providable by the electronic apparatus.

12. The electronic apparatus according to claim 11, wherein the input unit further receives information about an operation being performed by the electronic apparatus, and
the controller determines the user's current state by comparing the intention pattern information with the received current use state information and the received information about the operation being performed by the electronic apparatus.

13. The electronic apparatus according to claim 11 or 12, wherein the electronic apparatus comprises a television, and
the controller determines a user's current state by comparing the intention pattern information with the received current use state information and broadcasting contents being provided by the television.

14. The electronic apparatus according to claim 13, wherein the broadcasting contents comprises a predetermined broadcasting program comprising a plurality of segments, and
if the determined user's current state prefers a segment among the plurality of segments, the controller controls the output unit to output a proposed function or information related to only the preferred segment.

15. The electronic apparatus according to one of claims 11 to 14, further comprising a communication unit to access the Internet,
wherein the controller retrieves information corresponding to the user's current state from the Internet.
